## Europäisches Patentamt

(19) **European Patent Office**

**Office européen des brevets**

(11) Veröffentlichungsnummer: **0 205 940**
**B1**

(12) **EUROPÄISCHE PATENTSCHRIFT**

(45) Veröffentlichungstag der Patentschrift:
30.08.89

(21) Anmeldenummer: 86107001.9

(22) Anmeldetag: 23.05.86

(51) Int. Cl.⁴: **G11B 11/10**

(54) **Optisches System zum Führen des Lesestrahles bei einem magneto-optischen Speicher.**

(30) Priorität: 31.05.85 DE 3519556

(43) Veröffentlichungstag der Anmeldung:
30.12.86 Patentblatt 86/52

(45) Bekanntmachung des Hinweises auf die Patenterteilung:
30.08.89 Patentblatt 89/35

(84) Benannte Vertragsstaaten:
DE FR GB IT

(56) Entgegenhaltungen:
WO-A-85/01606
DE-A- 3 334 120
FR-A- 2 149 654
US-A- 3 228 015
US-A- 4 410 277

PATENTS ABSTRACTS OF JAPAN, Band 9,
Nr. 24 (P-331)[1747], 31. Januar 1985; & JP - A
- 59 168 955
PATENTS ABSTRACTS OF JAPAN, Band 8,
Nr. 192 (P-298)[1629], 4. September 1984; & JP - A
- 59 79 446
PATENTS ABSTRACTS OF JAPAN, Band 8,
Nr. 208 (P-302)[1645], 21. September 1984; & JP - A
- 59 92 457
PATENTS ABSTRACTS OF JAPAN, Band 8,

(73) Patentinhaber: Siemens Aktiengesellschaft,
Wittelsbacherplatz 2, D-8000 München 2(DE)

(72) Erfinder: Gottfried, Norbert, Dr. Dipl.-Phys.,
Schumannstrasse 30, D-8011 Baldham(DE)

(56) Entgegenhaltungen: (Fortsetzung)
Nr. 188 (P-297)[1625], 29. August 1984; & JP - A
- 59 77 649
PATENTS ABSTRACTS OF JAPAN, Band 9,
Nr. 72 (P-345)[1795], 2. April 1985; & JP - A - 59 203 259
PATENTS ABSTRACTS OF JAPAN, Band 9,
Nr. 54 (P-340)[1777], 8. März 1985; & JP - A - 59 191 156
PATENTS ABSTRACTS OF JAPAN, Band 6,
Nr. 116 (P-125)[994], 29. Juni 1982; & JP - A - 57 44 241
IBM TECHNICAL DISCLOSURE BULLETIN, Band 10,
Nr. 5, Oktober 1967, Seite 596, New York, US; J.W.
BECK: "Electro-optical reading system"
PATENTS ABSTRACTS OF JAPAN, Band 9,
Nr. 24 (P-331)[1747], 31. Januar 1985; & JP - A
- 59 168 951
PATENTS ABSTRACTS OF JAPAN, Band 7,
Nr. 15 (P-169)[1160], 21. Januar 1983; & JP - A
- 57 169 947
PATENTS ABSTRACTS OF JAPAN, Band 9,
Nr. 2 (P-325)[1725], 8. Januar 1985; & JP - A - 59 152 531
PATENTS ABSTRACTS OF JAPAN, Band 8,
Nr. 1 (P-246)[1438], 6. Januar 1984; & JP - A - 58 166 542
PATENTS ABSTRACTS OF JAPAN, Band 9,
Nr. 3 (P-333)[1753], 8. Februar 1985; & JP - A - 59 172 171
PATENTS ABSTRACTS OF JAPAN, Band 9,
Nr. 122 (P-359)[1845], 28. Mai 1985; & JP - A - 60 7636
JOURNAL OF ELECTRONIC ENGINEERING, Band 21,
Nr. 213, September 1984, Seiten 94-100, Tokyo, Japan;
S. MIYAOKA: "High-density storage possible with
optical disk recording"

## Beschreibung

Die Erfindung bezieht sich auf ein optisches System zum Führen des Lesestrahls bei einem magneto-optischen Speicher gemäß dem Oberbegriff des Hauptanspruches.

Bei magneto-optischen Speichern wird bekanntlich der von einer Laserlichtquelle ausgesandte Lichtstrahl auf eine ausgewählte Spur einer rotierenden Speicherplatte fokussiert. Dies gilt sowohl für den Schreib- als auch für den Lesevorgang, die sich unter anderem darin unterscheiden, daß beim Schreiben mit höherer Lichtintensität gearbeitet wird. Es ist eine typische Eigenschaft des magneto-optischen Speichers, daß aus dem reflektierten Laserlichtstrahl, der aus dem Strahlengang des Abtastlichtstrahles ausgeblendet wird, neben den Rohdatensignalen beim Lesen auch zwei Steuersignale für die exakte Positionierung des optischen Systems bezüglich des Speichermediums abgeleitet werden müssen. Einmal muß der Laserlichtstrahl in eine bestimmte Position radial zur Speicherplatte geführt und dort gehalten werden, dies besorgt bekanntlich ein Regelsystem für die Spurauswahl und die Spurfolge. Zum anderen muß der Laserlichtstrahl zu jedem Zeitpunkt auf einen Speicherbereich innerhalb einer solchen Spur fokussiert werden, d.h. man benötigt ein zweites Regelsystem, das sogenannte Fokussiersystem für die Aufrechterhaltung eines vorbestimmten vertikalen Abstandes zwischen der Oberfläche der Speicherplatte und dem optischen System.

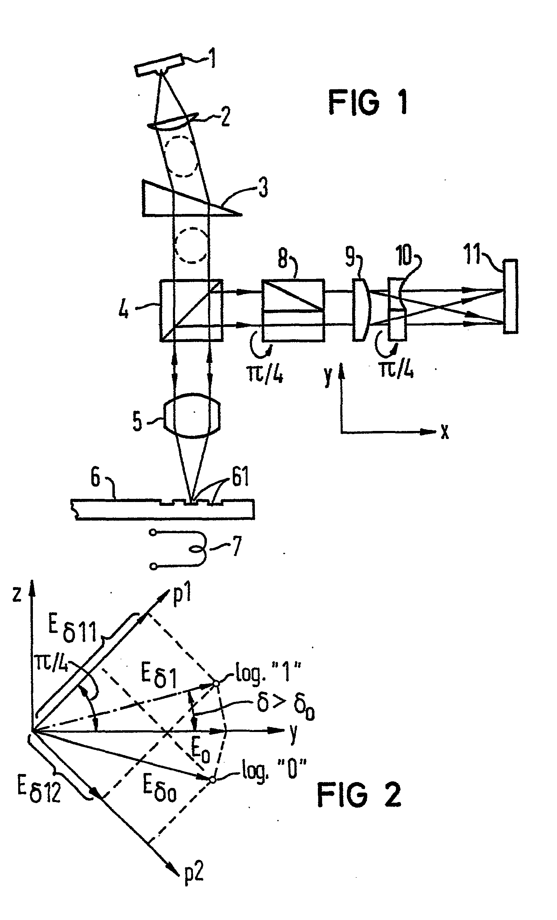

Optische Systeme zum Führen des Lesestrahles, die diese Aufgaben erfüllen, sind z.B. aus den Druckschriften Journal of Applied Physics, Vol. 53, No. 3, März 1982, S. 2335 - 2337 oder Japanese Journal of Applied Physics, Vol. 21, No. 8, August 1982, S. L509 - 511 bzw. Japanese Journal of Applied Physics Vol. 19, No. 12, Dez. 1980, S. L731 - 734 bekannt. In allen drei Druckschriften ist jeweils in Fig. 1 ein Blockschaltbild für einen magneto-optischen Speicher und dabei insbesondere der optische Strahlengang im Abtastsystem dargestellt. Gemeinsam ist diesen Anordnungen, daß der reflektierte Laserstrahl durch Strahlteiler mehrfach aufgespalten wird und diese Teilstrahlen dann auf örtlich getrennte Fotodetektorflächen abgebildet werden. Aus den von den einzelnen Fotodetektorflächen abgegebenen elektrischen Ausgangssignalen werden dann Rohdatensignale bzw. die erwähnten Steuersignale für das Fokussier- und das Spurfolgesystem gewonnen. Diese mehrfache Strahlaufteilung ist nicht nur aus Kostengründen unvorteilhaft, sondern hat auch den Nachteil, daß die in zwei Richtungen bezüglich der Speicherplatte zu positionierende Abtasteinheit wegen der Vielzahl von optischen Elementen eine relativ große Masse besitzt und damit mechanisch träger ist.

Aus den beiden letztgenannten Druckschriften sind darüber hinaus auch die beiden wesentlichen Formen für die Gewinnung des Steuersignales des Fokussiersystemes zu entnehmen, die man gewöhnlich als das astigmatische Abbildungsprinzip bzw. als das Prinzip des kritischen Winkels bezeichnet. Im ersteren Fall, der in der letzten der drei oben zitierten Druckschriften beschrieben und dort in Fig. 2 illustriert ist, wird der Abbildungsfehler einer Zylinderlinse in Verbindung mit einem Vier-Quadrantenfotodetektor benutzt, um einen Fokusfehler festzustellen. In der zweiten der oben genannten Druckschriften ist dagegen erläutert, wie das Steuersignal für das Fokussiersystem mit Hilfe eines in den Strahlengang eines ausgeblendeten Teilstrahles im sogenannten kritischen Winkel gestellten Prismas gewonnen wird.

Aus der Druckschrift DE-A 3 334 120 ist darüber hinaus ein Abtastkopf für einen optischen Speicher und ein Verfahren zur Ermittlung seines Fokus bekannt. Die bekannte Abtasteinheit weist neben Einrichtungen zum Erzeugen eines Lichtstrahles und zum Konzentrieren dieses Lichtstrahles auf die Oberfläche eines Speichermediums weitere Einrichtungen auf, die den vom Speichermedium reflektierten Lichtstrahl aus dem Strahlengang ausblenden und auf eine Detektoreinheit lenken.

Um den Lichtstrahl auf die Oberfläche des Speichermediums kontinuierlich fokussieren und weiterhin in wahlfreiem Zugriff bestimmte Speicherbereiche auswählen zu können, muß eine im Strahlengang angeordnete Kondensoreinheit in vertikaler und radialer Richtung zum scheibenförmigen Speichermedium verstellbar sein. Die bekannte Abtasteinheit verwendet flexible Lichtwellenleiter im Strahlengang zwischen einer Lichtquelle und der Kondensoreinheit einerseits sowie der Kondensoreinheit und der Detektoreinheit andererseits, um eine geringe Masse der bewegten Teile der Abtasteinheit zu ermöglichen.

In einer beschriebenen Ausführungsform ist weiterhin im Strahlengang des reflektierten Lichtes ein Strahlteiler vorgesehen, der als Wollastonprisma ausgebildet das reflektierte Licht in zwei Teilstrahlen aufspaltet. Hinter diesem Strahlteiler ist eine Kondensorlinse angeordnet, die die Teilstrahlen auf Eintrittsflächen der im Strahlengang des reflektierten Lichtes vorgesehenen Lichtwellenleiter lenkt. Diese Lichtwellenleiter im Strahlengang des reflektierten Lichtes sind als Doppelkernfasern ausgebildet, so daß jeweils die Randstrahlen getrennt von dem Zentralstrahl jedes der Teilstrahlen erfaßt und auf individuelle Detektorflächen der Detektoreinheit übertragen werden. Die Ausgangssignale der Detektorflächen werden für jeden Teilstrahl individuell Subtrahierschaltungen zugeführt. Aus der Differenz der Ausgangssignale der Subtrahierschaltungen wird ein Fokusfehlersignal gebildet. Aus der Summe aller Ausgangssignale der Detektorflächen dagegen wird ein Rohdatensignal abgeleitet.

In bezug auf diesen bekannten Stand der Technik liegt der vorliegenden Erfindung die Aufgabe zugrunde, ein optisches System zum Führen des Lesestrahles zu schaffen, das mit einer möglichst geringen Anzahl von optischen Elementen in einer kompakten und massearmen Abtasteinheit sowohl die Rohdatensignale als auch die Steuersignale für das Fokussier- bzw. das Spurfolgesystem liefert, wobei insbesondere auch angestrebt wird, die Abbildungsorte entsprechender Strahlen des reflektierten Lichtes möglichst nahe zusammen und in eine Ebene zu legen, so daß damit günstige geometrische Strukturen für eine Integration mit elektronischen Auswertungsschaltungen der Fotodetektorflächen gebildet werden.

Bei einem optischen System der eingangs genannten Art wird diese Aufgabe erfindungsgemäß durch die im Kennzeichen des Hauptanspruches beschriebenen Merkmale gelöst.

Bei dieser Lösung wird ein einziger Strahlteiler verwendet, der den reflektierten Laserstrahl aus dem Strahlengang des Abtaststrahles ausblendet. Der reflektierte Laserstrahl wird durch einen Polarisator in zwei Teilstrahlen zerlegt, die auf getrennte, aber örtlich nahe beieinander liegende Bildpunkte eines gemeinsamen Fotodetektors abgebildet werden. Zur Abbildung der Teilstrahlen wird aber nicht eine Kondensorlinse in Verbindung mit Doppelkernfasern sowie konzentrische Detektorflächen eingesetzt. Es wird vielmehr ein astigmatisches Abbildungssystem in Verbindung mit einer Vier-Quadranten-Teilung des einen Bildpunktes des Fotodetektors verwendet, um das Steuersignal für das Fokussiersystem in an sich bekannter Weise zu gewinnen. In diesem Fall werden je zwei der diametral einander gegenüberliegenden Teilflächen dieses Abbildungspunktes bezüglich ihrer elektrischen Ausgangssignale zusammengefaßt und aus den so entstandenen Teilsummensignalen durch Subtraktion ein Differenzsignal gebildet, das das Steuersignal für das Fokussiersystem darstellt.

In anderer Kombination, nämlich durch Addition aller vier Ausgangssignale der Teilflächen des Vier-Quadranten-Detektors wird derselbe Abbildungspunkt verwendet, um in Verbindung mit dem elektrischen Ausgangssignal des zweiten Abbildungspunktes ein weiteres Differenzsignal zu bilden, das nun das Rohdatensignal darstellt.

Schließlich können die vier Teilflächen des Vier-Quadranten-Detektors nun in einer dritten Art miteinander kombiniert werden, um das Steuersignal für das Spurfolgesystem zu erzeugen. In diesem Fall werden die Teilflächen des Vier-Quadranten-Detektors bezüglich ihrer elektrischen Ausgangssignale paarweise so zusammengefaßt, daß diese beiden Paare symmetrisch bezüglich einer Diagonale liegen, die mit der Projektion der Tangente der Abtastspur auf der Speicherplatte zusammenfällt. Ein drittes, aus diesen beiden so zusammengefaßten Paaren der Teilflächen abgeleitetes Differenzsignal bildet das Steuersignal für das Spurfolgesystem. Das letztgenannte Steuersignal könnte aber auch durch eine entsprechende Aufteilung des zweiten Abbildungspunktes auf dem Fotodetektor aus dem zweiten Teilstrahl des reflektierten Laserstrahles gewonnen werden.

Diese Flächengeometrie des Fotodetektors kann mit Vorteil weiterhin dazu benutzt werden, die für die Bildung der Differenzsignale benötigten Summier- und Subtrahierschaltungen zusammen mit den lichtempfindlichen Flächen des Fotodetektors in einem integrierten Schaltkreis anzuordnen, der dann die Detektoreinheit des Abtastsystemes bildet. In diese elektronische Einheit könnten sogar weitere, signalverarbeitende Stufen z.B. zur Signalformung und/oder Filterung einbezogen werden, ohne daß dadurch dieser Detektorbaustein übermäßig komplex oder groß und schwer würde. Die Erfindung ermöglicht daher, ein einfaches und leichtes, also für einen mechanisch bewegten Positionierer besonders geeignetes Abtastsystem aufzubauen. Spezielle Weiterbildungen der Erfindung sind in Unteransprüchen beschrieben. Ihre Funktionen und Vorteile ergeben sich aus der nachfolgenden Beschreibung von Ausführungsbeispielen.

Die anschließende Beschreibung von Ausführungsbeispielen erfolgt aufgrund der Zeichnung, dabei zeigt:

Fig. 1 in einem Blockschaltbild den Prinzipaufbau des optischen Abtastsystems für einen magneto-optischen Speicher,

Fig. 2 ein Vektordiagramm für die Strahlaufteilung des reflektierten Laserstrahles in einem Polarisator,

Fig. 3 das Prinzip einer optischen Abbildung eines astigmatischen Abbildungssystems im Strahlengang des reflektierten Laserstrahles,

Fig. 4 bis 6 Beispiele für die unterschiedliche Abbildung des reflektierten Laserstrahles durch dieses astigmatische Abbildungssystem bei unterschiedlichen Gegenstandsweiten des abgetasteten Bildpunktes auf der Speicherplatte vom optischen System,

Fig. 7 die entsprechend dieser Bilddrehung gewählte gedrehte Lage des Fotodetektors im Strahlengang des reflektierten Laserstrahles,

Fig. 8 und 9 zwei Prinzipdarstellungen eines Abtastpunktes auf der Speicherplatte mit unterschiedlicher Lage zur Spurmitte,

Fig. 10 und 11 je eine Prinzipdarstellung der Ausleuchtung der entsprechenden Fotodetektorflächen bei einem der Abtastfälle gemäß Fig. 8 bzw. Fig. 9 und

Fig. 12 ein Blockschaltbild der Grundschaltung eines integrierten Schaltkreises, der den Fotodetektor mit den beiden Abbildungspunkten und dazugehörige Auswerteschaltungen zum Gewinnen der Rohdatensignale, sowie der Steuersignale für das Fokussier- und das Spurfolgesystem enthält.

In dem in Fig. 1 dargestellten Blockschaltbild für einen magneto-optischen Speicher ist eine Laserdiode 1 als Lichtquelle dargestellt, die einen linear polarisierten Laserstrahl ausstrahlt. Der divergierende Laserstrahl wird von einer Sammellinse 2 gebündelt. Dieses Lichtbündel ist, wie im Strahlengang mit unterbrochenen Linien angedeutet, wegen der Eigenschaften der Laserdiode 1 noch elliptisch verformt. Es ist ein Prisma 3 vorgesehen, dessen brechende Kante unter einem bestimmten Winkel zum Strahlenverlauf steht, so daß das gebrochene Lichtbündel bei einer Verzerrung in der Zeichenebene in ein Lichtbündel mit kreisförmigem Querschnitt umgeformt wird. Dieses Lichtbündel wird einem polarisierenden Strahlteiler 4 zugeführt, der bezüglich der Strahlrichtung des einfallenden linear polarisierten Lichtbündels durchlässig ist. Das durch den Strahlteiler 4 hindurchgetretene Lichtbündel wird mit Hilfe eines Objektivs 5 auf der Oberfläche einer Speicherplatte 6 in einem Abtastpunkt fokussiert.

Die Speicherplatte 6 wird von einer nicht dargestellten Antriebseinrichtung angetrieben und läuft in einer zur Zeichenebene senkrechten Ebene um. Sie besitzt eine Vielzahl von konzentrischen Aufzeichnungsspuren 61, von denen einige schematisch und nicht maßstabsgetreu in Fig. 1 angedeutet sind. Eine Charakteristik des magneto-optischen Speichers ist, daß als Speichermedium Materialien verwendet werden, deren magnetische Eigenschaften temperaturabhängig sind. Da im vorliegenden Fall weder Fragen des Speichermediums an sich noch der Art des Schreibverfahrens von Bedeutung sind, genügt es anzudeuten, daß beim Einschreiben ein Laserstrahl mit ausreichender Intensität auf der Oberfläche der Speicherplatte 6 fokussiert wird. Einwirkungszeit und Intensität des Laserstrahles reichen aus, um das Speichermedium in diesem Brennfleck von der Größe einer ausreichend stabilen Speicherdomäne lokal so weit zu erwärmen, daß es in diesem Bereich paramagnetisch wird. Beim Abkühlen genügt dann ein relativ kleines, von einer schematisch angedeuteten Spule 7 abgegebenes Magnetfeld, um lokal eine Magnetisierungsrichtung festzulegen. Voraussetzungsgemäß ist die Koerzitivfeldstärke des Speichermaterials bei Raumtemperatur wesentlich höher als die zum Einschreiben nötige Feldstärke, so daß nicht erwärmte Bereiche der Speicherplatte 6 nicht ummagnetisiert werden können.

Selbstverständlich muß der Laserstrahl für Schreib- und Lesevorgänge bezüglich der einzelnen Spuren 61 der Speicherplatte 6 radial positionierbar sein und beim Betrieb des Speichers auf einer ausgewählten Spur gehalten werden können. Weiterhin ist es bei allen optischen Speichern von wesentlicher Bedeutung, daß der Laserlichtstrahl auf der Speicherplatte 6 im Fokus gehalten wird, d.h. ein vorgegebener Abstand zwischen Objektiv 5 und der Oberfläche der Speicherplatte 6 eingehalten wird. Solche Positionier-, Spurfolge- und Fokussiersysteme für optische und insbesondere magneto-optische Speicher sind bekannt und in dem Blockschaltbild von Fig. 1 nicht dargestellt, da sie an sich hier nicht von Bedeutung sind.

Wesentlich für den vorliegenden Fall ist nur, daß neben den eigentlichen Datensignalen auch Steuersignale für ein Spurfolgesystem und ein Fokussiersystem aus den Lesesignalen gewonnen werden. Wie dies geschieht, wird nun im folgenden im einzelnen erläutert. Zum Lesen eines magneto-optischen Speichers wird der Kerr- bzw. der Faraday-Effekt ausgenutzt, nach denen linear polarisiertes Licht bei Reflexion an bzw. Durchgang durch eine Schicht mit magnetischer Vorzugsrichtung entsprechend dieser Richtung eine positive bzw. negative Drehung seiner Polarisationsebene erfährt.

Beim Lesevorgang wird also die Laserdiode 1 im Dauerbetrieb bei geringerer Leistung gehalten und der Laserlichtstrahl wiederum durch das Objektiv 5 auf die Oberfläche der Speicherplatte 6 fokussiert. Das reflektierte und in seiner Polarisationsebene der lokalen Magnetisierung entsprechend gedrehte Licht tritt durch das Objektiv 5 hindurch wiederum in den Strahlteiler 4 ein. Die Strahlrichtung ist nun zu dem ausgesandten Laserlichtstrahl entgegengesetzt, d.h. daß dieses Licht nun im Strahlteiler 4 seitlich ausgelenkt wird.

Der ausgeblendete reflektierte Laserstrahl wird einem Polarisator 8 zugeführt, der als Wollastonoder Rochonprisma ausgebildet sein kann. Beide Prismenarten haben die Eigenschaft, empfangenes Licht in zwei linear polarisierte Teilstrahlen mit zueinander senkrechten Polarisationsebenen aufzuspalten. Im vorliegenden Fall werden beide Teilstrahlen ausgewertet und durch eine weitere Sammellinse 9 in Verbindung mit einer Zylinderlinse 10 auf einer Detektoranordnung 11 in zwei örtlich zueinander versetzten Bildpunkten abgebildet.

Diese Detektoranordnung ist vorzugsweise als ein integrierter Schaltkreis mit einem Fotodetektor einer besonderen Geometrie mit einzelnen Detektorflächen ausgebildet, die, in geeigneter Weise miteinander kombiniert, Rohdatensignale und Steuersignale für das Spurfolge- bzw. das Fokussiersystem abzuleiten gestatten.

Um diese Geometrie des Fotodetektors 11 näher zu erläutern, wird zunächst die Gewinnung der Rohdatensignale im einzelnen betrachtet. Zur Vereinfachung der Erläuterung wird angenommen, daß benachbarte Speicherdomänen in einer ausgewählten Spur der Speicherplatte 6 in kontinuierlicher Folge abwechselnd entgegengesetzte Magnetisierung aufweisen, d. h. benachbarte Speicherdomänen die Zustände "logisch 0" bzw. "logisch 1" repräsentieren. Im zeitlichen Verlauf springt also die Polarisationsebene des reflektierten Laserstrahles ständig um einen Winkel $2\delta_0$, wobei $\delta_0$ der Drehwinkel ist, um den der linear polarisierte Laserstrahl bei der Reflexion am Speichermedium gedreht wird.

Dies ist in dem Vektordiagramm von Fig. 2 angedeutet, das die Strahlaufteilung des reflektierten Laserstrahles im Polarisator 8 qualitativ verdeutlicht. Um den Zusammenhang mit dem Blockschaltbild von Fig. 1 herzustellen, ist dort die Zeichenebene willkürlich als Ebene x, y angenommen, wobei die x-Richtung mit der Strahlrichtung des abgelenkten reflektierten Laserstrahles hinter dem Strahlteiler 4 übereinstimmt. In der zu dieser Strahlrichtung senkrechten Ebene y, z, in der das Vektordiagramm von Fig. 2 gezeichnet ist, liegt dann der Feldstärkevektor des linear polarisierten Laserstrahles. Symmetrisch zur y-Richtung liegen zwei Vektoren $E_{\delta_1}$ und $E_{\delta_0}$, jeweils um den Winkel $\delta$ zur y-Richtung gedreht. Jeweils einer dieser beiden Vektoren stellt den Feldstärkevektor für einen der beiden Zustände des reflektierten Laserstrahles vor dem Eintritt in den Polarisator 8 dar, repräsentiert also entweder den Zustand "logisch 1" bzw. "logisch 0" des jeweils abgetasteten Speicherbereiches auf der Speicherplatte 6. Aufgrund der obigen Voraussetzungen hinsichtlich der aufgezeichneten Datenfolge ergibt sich somit also ein zeitlicher Mittelwert für den Feldstärkevektor, bezeichnet mit Eo, der in y-Richtung liegt.

An dieser Stelle sei nur darauf hingewiesen, daß der im Vektordiagramm von Fig. 2 dargestellte Drehwinkel $\delta$ genaugenommen den Drehwinkel hinter dem Strahlteiler 4 repräsentiert. Der aufgrund des magneto-optischen Effekts auftretende Drehwinkel $\delta_0$ wäre noch geringer, denn der Strahlteiler 4 bewirkt auch noch eine Aufweitung dieses Drehwinkels, was sich systematisch hier als Effektverstärkung auswirkt. Wegen der qualitativen Darstellung des Vektordiagrammes in Fig. 2 sei hier noch ein quantitatives Beispiel für heute verfügbare Speichermaterialien gegeben. Dabei beträgt der Drehwinkel $\delta_0$ aufgrund des magneto-optischen Effektes etwa 0,25° , während dann die tatsächlich nach dem polarisierenden Strahlteiler 4 auftretende Drehung etwa mit $\delta = 1°$ anzusetzen ist.

Im Vektordiagramm von Fig. 2 ist nun ein weiteres, gegenüber dem Koordinatensystem y, z um 45° gedrehtes Koordinatensystem p1, p2 angegeben. Dieses Koordinatensystem repräsentiert die aufgrund der Kristallstruktur des Polarisators 8 vorgegebene Lage der zueinander senkrechten Polarisationsrichtungen des in einen ersten und einen zweiten Teilstrahl aufgespaltenen reflektierten Laserstrahles. Mit anderen Worten, es wird der dem Zustand "logisch 1" entsprechende Feldstärkevektor $E_{\delta 1}$ im Polarisator in zwei zueinander senkrecht stehende, jeweils einem der beiden vom Polarisator 8 abgegebenen Teilstrahlen zugeordnete Feldstärkekomponenten $E_{11}$ bzw. $E_{12}$ zerlegt. Analoges gilt für die Aufspaltung des Feldstärkevektors $E_{\delta 0}$, der dem Zustand "logisch 0" zuzuordnen ist. Aus Gründen der Übersichtlichkeit des Vektordiagrammes sind hier allerdings Bezeichnungen nicht eingeführt.

Aus der zur y-Richtung symmetrischen Lage des Koordinatensystems p1, p2 folgt offensichtlich, daß die Intensität, d.h. die Beleuchtungsstärke an den Abbildungspunkten des ersten und des zweiten Teilstrahles auf dem Fotodetektor 11 unter den oben gegebenen Voraussetzungen einer kontinuierlich wechselnden Datensignalfolge im zeitlichen Mittel identisch ist. Wie sich aus dem Vektordiagramm von Fig. 2 ablesen läßt, wird dies durch die 45°-Drehung des Polarisators 8, die auch schematisch in Fig. 1 angedeutet ist, bewirkt. Vergleicht man jedoch die Beleuchtungsstärke in den Abbildungspunkten der Teilstrahlen zu einem bestimmten Zeitpunkt, dann zeigt sich ein eindeutiger, von der aktuellen Polarisationsrichtung des reflektierten Laserstrahles abhängiger Intensitätsunterschied, der, als Differenzsignal ausgewertet, das Rohdatensignal ergibt. Funktional betrachtet ist die Lage der Abbildungspunkte der beiden Teilstrahlen auf dem Fotodetektor 11 zunächst bedeutungslos mit der einen Einschränkung, daß beide Abbildungsbereiche einen örtlich ausreichenden Abstand aufweisen müssen, um eindeutig detektierbar zu sein.

Anders wird dies bei der Auswertung des reflektierten Laserstrahles zur Gewinnung des Steuersignales für das Fokussiersystem. Die weitere Sammellinse 9 und die Zylinderlinse 10 bilden gemeinsam ein astigmatisches Abbildungssystem. Das bedeutet bekanntlich, daß das gesamte, von einem Objektpunkt ausgehende Lichtbündel keinen einheitlichen Bildpunkt liefert, vielmehr entstehen an zwei getrennten Bildorten mit unterschiedlichen Schnittweiten Bildlinien anstelle von Bildpunkten.

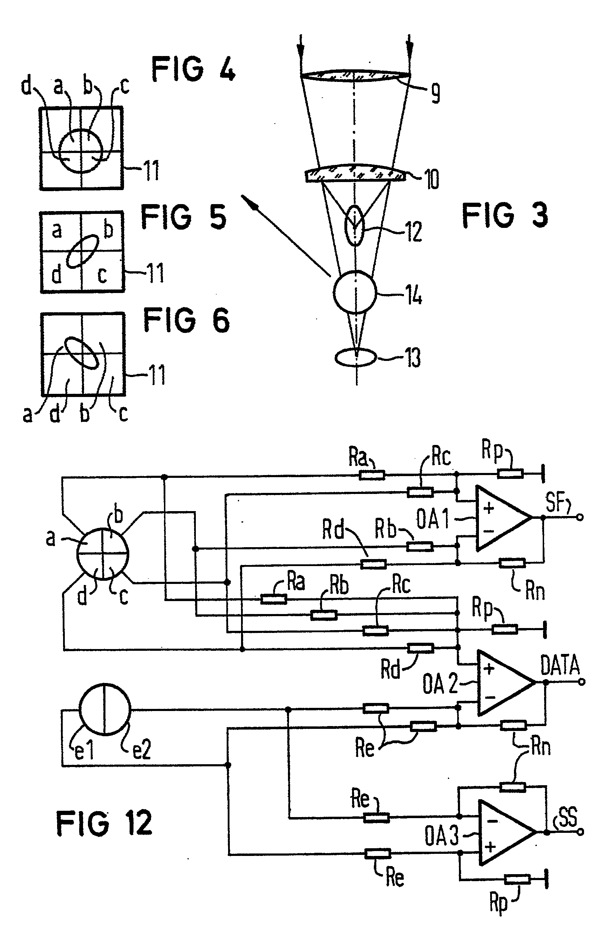

Dieser bekannte Sachverhalt ist schematisch in Fig. 3 dargestellt. Dabei sind wieder die weitere Sammellinse mit 9 und die Zylinderlinse mit 10 bezeichnet. In Fig. 3 ist nun mit 12 der erste Bildort und mit 13 der zweite Bildort bezeichnet. Die astigmatische Verzerrung liefert in den beiden Bildorten 12 und 13 jeweils eine Abbildung, in der ein Objektpunkt in Form einer Ellipse wiedergegeben wird. Dabei liegt die Hauptachse der Ellipse im linsennahen Bildort 12 parallel zur Mantellinie der Zylinderlinse 10 und die Hauptachse der Ellipse im linsenfernen Bildort 13 senkrecht dazu, wie durch entsprechende Ellipsen in Fig. 3 angedeutet ist. Damit ist ohne weiteres einsehbar, daß an allen Orten zwischen den beiden Bildorten 12 und 13 Übergangsformen zwischen der einen und der anderen Abbildung auftreten.

Geht man nun davon aus, daß ein Objekt exakt im Fokus eines Objektivsystems 5 liegt, das in Fig. 3 nicht dargestellt ist, dann läßt sich ein zwischen dem linsennahen Bildort 12 und dem linsenfernen Bildort 13 liegender Abbildungsort 14 finden, in dem beide Ellipsenachsen die gleiche Größe besitzen, d. h. die Abbildung eines Objektpunktes exakt einen Kreis ergibt, sowie dies schematisch in Fig. 4 angedeutet ist.

Hält man nun die Abbildungsebene 14 fest und betrachtet stattdessen den Fall, daß der Objektpunkt nicht im Fokus des Objektivs 5 liegt, dann entartet wiederum die kreisförmige Abbildung zu einer Ellipse.

Dieses Verhalten läßt sich nun im gegebenen Anwendungsfall dazu benutzen, das Steuersignal für das Fokussiersystem aus dem reflektierten Laserstrahl zu gewinnen. Der Fotodetektor 11 wird am Ort der mittleren Abbildungsebene 14 in bezug auf das aus der weiteren Sammellinse 9 und der Zylinderlinse 10 gebildete astigmatische Abbildungssystem so angeordnet, daß sich der Abtastpunkt auf der Oberfläche der Speicherplatte 6 bei korrektem Abstand zwischen Speicherplatte 6 und Objektiv 5 für einen der beiden Teilstrahlen als ein kreisförmiger Fleck auf der Oberfläche des Fotodetektors 11 abbildet.

Dabei ist die beleuchtete Kreisfläche, wie in Fig. 4 schematisch dargestellt, so in vier individuell wirkende Quadranten a, b, c, und d unterteilt, daß die Projektion der Tangente zu den Abtastspuren 61 auf dem Speichermedium 6 in der Trennungslinie zwischen den Teilbereichen a, d einerseits und den Teilbereichen b, c andererseits liegt. Jeder dieser Teilbereiche a bis d soll ein individuelles elektrisches Ausgangssignal abgeben. Wenn dann die Ausgangssignale der einander gegenüberliegenden Teilbereiche a und c bzw. b und d paarweise miteinander summiert werden und außerdem die beiden so erhaltenen Summensignale voneinander abgezogen werden und damit ein Differenzsignal gebildet wird, dann muß das so gewonnene Steuersignal für das Fokussiersystem den Wert Null haben, wenn der abtastende Laserlichtstrahl auf die Oberfläche des Speichermediums fokussiert ist.

In Fig. 5 ist nun der Fall schematisch dargestellt, wenn die Speicherplatte 6 zu nahe an das Objektiv 5 heranrückt, während Fig. 6 den umgekehrten Fall illustriert, bei dem die Gegenstandsweite des Abtastpunktes auf dem Speichermedium 6 in bezug auf das Objektiv 5 größer ist als dessen Brennweite. Man erkennt, daß die kreisförmige Abbildung in zueinander gedrehte Ellipsen entartet. Das analog abgeleitete Steuersignal für das Fokussiersystem wird damit ungleich Null und hat in bezug auf die beiden in Fig. 5 bzw. Fig. 6 dargestellten Fälle umgekehrtes Vorzeichen. Das Vorzeichen beinhaltet also die Richtungsinformation und der Absolutwert des Steuersignals die Abstandsinformation für eine Ablage des Speichermediums 6 bezüglich des Objektivs 5 vom Brennpunkt dieses Objektivs.

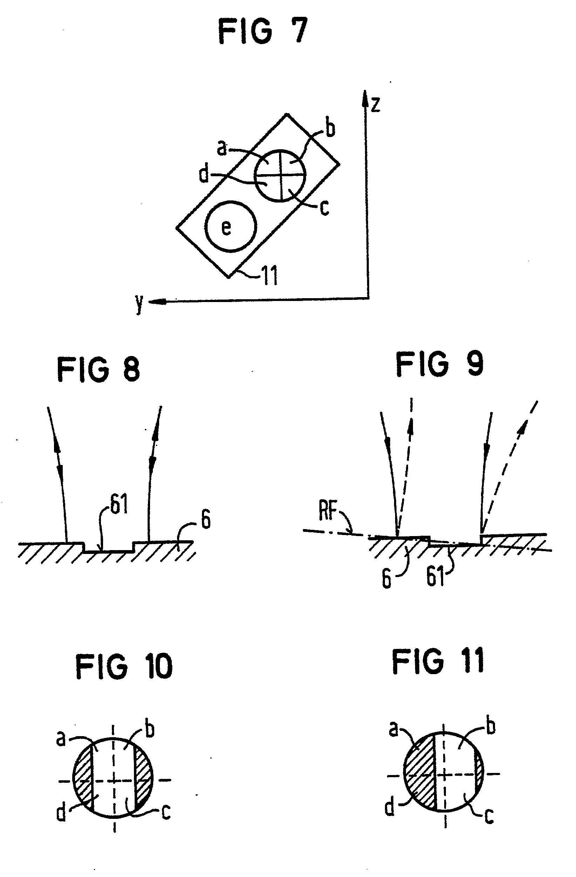

Bei dieser Betrachtung blieb eine Eigenschaft des astigmatischen Abbildungssystems 9, 10 bisher noch unberücksichtigt. Wie in Fig. 3 dargestellt, befindet sich der Detektor 11 am Bildort 14. Eine genauere Analyse der Abbildung zeigt nun, daß die Tangente zu den Abtastspuren 61 auf dem Detektor 11 gegenüber ihrer Lage vor dem astigmatischen Abbildungssystem 9, 10 um 90° gedreht erscheint. Für den vorliegenden Anwendungsfall beachte man zusätzlich die der Drehung des Polarisators 8 entsprechende Drehung der Zylinderlinse 10. Damit sind zugleich auch alle Parameter für die Geometrie des Fotodetektors 11 erläutert. Er liegt, wie in Fig. 7 dargestellt, mit seiner Hauptachse, die durch die beiden Abbildungsflecken der Teilstrahlen des Polarisators 8 läuft, um 45° gegen die y-Richtung gedreht in der yz-Ebene.

Damit ist nun noch die Gewinnung des Steuersignals für das Spurfolgesystem zu erläutern. In Fig. 8 ist dazu schematisch ein abtastender Laserstrahl dargestellt, der exakt auf die Spurmitte einer der Abtastspuren 61 der Speicherplatte 6 ausgerichtet ist. Dieser Laserstrahl wird in sich selbst reflektiert. Man beachte hier, daß die senkrecht zur Zeichenebene stehende Spurtangente Symmetrielinie ist. Nach obigen Erläuterungen muß daher die Beleuchtungsstärke auf dem Fotodetektor 11 in seinen Quadranten a und d bzw. b und c dieser Symmetriebedingung genügen und damit identisch sein, sofern die Fokusbedingung für die Speicherplatte 6 eingehalten ist. Daraus folgt, daß das Steuersignal für das Spurfolgesystem aus den voneinander subtrahierten Teilsummen der von den Teilbereichen a und d bzw. b und c des Fotodetektors 11 abgegebenen Signale zu bilden ist. Dieses Steuersignal hat damit den Wert Null, solange der abtastende Laserstrahl exakt auf der aktuell zugeordneten Spur 61 der Speicherplatte 6 liegt.

In Fig. 9 ist nun der Fall einer Spurabweichung dargestellt. Die Folge der Spurablage des abtastenden Laserstrahles, der in ausgezogenen Linien dargestellt ist, läßt sich qualitativ so deuten: Die Dimension des Abbildungspunktes des abtastenden Laserstrahles auf der Oberfläche der Speicherplatte 6 liegt in der Größenordnung der entsprechenden Lichtwellenlänge λ des Laserlichtes. Lokale Veränderungen einer Flächenstruktur von dieser Dimension können daher nicht ohne weiteres nach den Regeln der geometrischen Optik behandelt werden, die immer davon ausgeht, daß die geometrischen Dimensionen groß gegenüber der Wellenlänge des Lichtes sind.

Im vorliegenden Fall ist es daher zweckmäßig und auch gerechtfertigt, sich die Reflexionsfläche des Laserstrahles im Bereich der Spur 61 als eine ebene Fläche vorzustellen, die in erster Näherung die Stufe am Rand der Spur 61 linearisiert. Damit ergibt sich die als strichpunktierte Linie eingezeichnete Reflexionsebene RF, die gegenüber der Oberfläche der Speicherplatte 6 um einen kleinen Winkel geneigt ist. Der an dieser gedachten Reflexionsebene reflektierte Laserstrahl wird also, wie in Fig. 9 schematisch angedeutet, gegenüber dem einfallenden Laserstrahl um einen geringen Betrag gedreht und wird damit vom Objektiv 5 in einen Parallelstrahl abgebildet, der gegenüber dem einfallenden Laserstrahl geringfügig parallel versetzt ist.

Wie sich diese unterschiedliche Reflexion des einfallenden Laserstrahles bei Spurzentrierung bzw. Spurablage im Fotodetektor 11 auswirkt, ist in den Fig. 10 bis 11 schematisch dargestellt. Beide Figuren zeigen wieder die Kreisfläche des Fotodetektors 11 mit den vier Quadranten a, b, c und d von Fig. 7 und deuten in dem nicht gestrichelten Teil das Profil des auf den Fotodetektor 11 abgebildeten reflektierten Laserstrahles an. Fig. 10 zeigt dabei die symmetrische Abbildung des Laserstrahles, die sich ergibt, wenn der abtastende Laserstrahl zur Spurmitte zentriert ist, wie es in Fig. 8 dargestellt ist. Im Gegensatz dazu zeigt Fig. 11 die sich aus der Parallelversetzung des reflektierten Laserstrahles ergebende asymmetrische Abbildung sowohl nach der Richtung der Ablage als auch nach ihrer Größe.

Aus diesen geometrischen Zusammenhängen ergibt sich eine einfache Lösung, das Steuersignal für das Spurfolgesystem abzuleiten. Dieses Steuersignal kann als Differenzsignal aus den beiden Teilsummen der von den Quadranten a und d bzw. b und c abgegebenen Signalen gebildet werden. Im Fall der exakten Spurzentrierung sind dann die beiden Teilsummenwerte identisch und das daraus abgeleitete Differenzsignal hat den Wert Null. Im Gegensatz dazu ist das Steuersignal für das Spurfolgesystem bei einer Spurablage des abtastenden Laserstrahles ungleich Null, wobei sein Absolutwert den Betrag der Spurablage widerspiegelt und sein Vorzeichen die Richtung der Spurablage angibt.

Das beschriebene optische System genügt also allen Bedingungen eines Abtastsystems für einen magneto-optischen Speicher, bei dem aus einem reflektierten Laserstrahl ohne mehrfache Strahlteilung sowohl das Rohdatensignal als auch die Steuersignale für das Fokussier- bzw. das Spurfolgesystem gewonnen werden können. Dies bedeutet nicht nur eine Vereinfachung im optischen Strahlengang zusammen mit einer Verringerung der notwendigen optischen Elemente, sondern auch eine weitere Möglichkeit für die Ausgestaltung des Fotodetektors. Da in diesem Fall alle Fotodetektorflächen zum Erzeugen der unterschiedlichen Signale räumlich eng beieinanderliegend, in einer Ebene angeordnet sind, kann dieser Fotodetektor als ein integrierter Schaltkreis aufgebaut werden, d. h. man kann auch alle elektronischen Elemente in diese integrierte Schaltung aufnehmen, mit denen die oben beschriebenen Kombinationen der Ausgangssignale der einzelnen Fotodetektorflächen gebildet werden. Es können sogar weitere signalverarbeitende Schaltungen, wie beispielsweise Vorverstärker und Signalformerstufen in einen solchen integrierten Schaltkreis einbezogen werden, ohne daß dadurch die Masse und damit die Trägheit des optischen Abtastsystemes in einem nennenswerten Umfang verändert würde. Damit wird deutlich, daß das beschriebene optische System sich insbesondere für eine Verwendung in Verbindung mit einem magneto-optischen Speicher eignet, der eine mechanisch ausgebildet Positioniereinheit besitzen und dennoch kurze Zugriffszeiten ermöglichen soll.

Ein Blockschaltbild für die Grundschaltung eines derartigen integrierten Schaltkreises ist in Fig. 12 dargestellt. Darin sind schematisch aus Gründen der Einheitlichkeit der Darstellung die Fotodetektorflächen des Fotodetektors 11 mit zwei Kreisflächen analog zu Fig. 7 gezeigt und entsprechend bezeichnet. Im Unterschied zu Fig. 7 ist allerdings hier, gemäß einer weiteren möglichen Ausführungsform, die dem zweiten Teilstrahl des reflektierten Laserstrahles zugeordnete Detektorfläche e in zwei Teilflächen e1, e2 unterteilt. Dies bietet die Möglichkeit, das Spurfolgesteuersignal aus der Abbildung dieses zweiten Teilstrahles zu gewinnen, während das Steuersignal für das Fokussiersystem aus der Abbildung des ersten Teilstrahles abgeleitet wird.

Zu diesem Zweck ist ein erster Operationsverstärker OA1 vorgesehen, dessen positiver Eingang parallel über je einen Eingangswiderstand Ra und Rc an die Fotodetektorflächen a bzw. c des Vier-Quadrantendetektors und außerdem über einen gemeinsamen Teilerwiderstand Rp an Masse angeschlossen ist. Analog sind die beiden anderen Fotodetektorflächen b und d über entsprechende Eingangswiderstände Rb bzw. Rd gemeinsam an den negativen Eingang des Operationsverstärkers OA1 angeschlossen, der außerdem über einen weiteren Widerstand Rn gegengekoppelt ist. In dieser Weise ist der erste Operationsverstärker OA1 als Mehrfach-Subtrahierer geschaltet, bei dem seine Ausgangsspannung SF, die das Steuersignal für das Fokussiersystem bildet, sich aus der Beziehung:

$$SF = \alpha(Ub + Ud) - \alpha(Ua + Uc)$$

ergibt, wobei Ua, Ub, Uc, Ud die an den entsprechenden Fotodetektorflächen a bis d des Fotodetektors 11 abgegebenen Signalspannungen sind und $\alpha$ der aus dem jeweiligen Widerstandsverhältnis von Eingangswiderstand Ra, Rb, Rc bzw. Rd und dem Gegenkopplungswiderstand Rn bzw. dem Teilerwiderstand Rp vorgegebene Verstärkungsfaktor ist. Aus Gründen der Einfachheit ist außerdem für die obige Beziehung angenommen, daß die Eingangswiderstände einerseits bzw. der Gegenkopplungswiderstand Rn und der Teilerwiderstand Rp andererseits jeweils gleich groß sind.

In entsprechender Form ist ein zweiter Operationsverstärker OA2 beschaltet, dessen Ausgangsspannung DATA das Rohdatensignal darstellt. Hier sind parallel die Ausgangssignale der vier Teilflächen a bis d des Vier-Quadrantendetektors dem positiven Eingang und die Ausgangssignale der Fotodetektorflächen e1, e2 dem negativen Eingang wieder über entsprechende Eingangswiderstände Ra bis Rd bzw. Re zugeführt. Der zweite Operationsverstärker OA2 bildet damit das Differenzsignal aus den jeweils einem der Verstärkereingängen zugeführten Teilsummensignalen. Mit einem dritten Operationsverstärker OA3 wird die Differenz der Beleuchtungsstärken der Teilflächen e1 und e2 in derselben Weise bewertet und damit ein Ausgangssignal SS gewonnen, das das Steuersignal für das Spurfolgesystem darstellt.

Die beschriebene Schaltung ist nur ein mögliches Ausführungsbeispiel für den integrierten Schaltkreis, selbstverständlich könnten auch andere, an sich bekannte Summier- und Subtrahierschaltungen implementiert werden und, wie oben angedeutet, wäre es auch denkbar, zusätzlich signalverarbeitende elektronische Baueinheiten zur Signalformung und Filterung in den integrierten Schaltkreis einzubeziehen.

Die beschriebenen Ausführungsbeispiele sollen keine Beschränkung des Erfindungsgedankens bedeuten, denn es sind eine Reihe von Abwandlungen denkbar. So wäre es beispielsweise in bezug auf die Führung des Lichtstrahles ohne weiteres möglich, die Reihenfolge des Polarisators 8 und des astigmatischen Abbildungssystems 9, 10 miteinander zu vertauschen, ohne daß dies funktional eine wesentliche Änderung bedeutete. Darüber hinaus sei festgestellt, daß insgesamt die zur Führung des Laserstrahles notwendigen Elemente hier nur beispielhaft und aus Gründen der Übersicht auch vereinfacht dargestellt sind. Bei einem praktischen Aufbau würde man beispielsweise versuchen, die wesentlichen optischen Weglängen in eine Ebene parallel zur Speicherplatte 6 zu legen, was z. B. bedeutet, daß zwischen dem Strahlteiler 4 und dem Objektiv 5 ein Umlenkspiegel anzuordnen wäre. Das beschriebene optische System kann zudem in unterschiedlichen Winkellagen zur Tangente der Aufzeichnungsspuren 61 angeordnet sein kann und damit wäre auch eine unterschiedliche geometrische Anordnung des Fotodetektors 11 bezüglich der Hauptstrahlrichtung zu berücksichtigen.

Bei all diesen Ausgestaltungen ist das Prinzip gewahrt, daß die beiden Steuersignale für das Fokussier- bzw. das Spurfolgesystem in erster Ordnung auch dann entkoppelt sind, wenn, wie im ersten Ausführungsbeispiel beschrieben, beide Steuersignale aus ein und derselben Abbildung eines der Teilstrahlen abgeleitet werden. Denn es läßt sich leicht überlegen, daß selbst dann bei einer Spurablage, jedoch korrektem Fokus kein scheinbarer Fokusfehler auftreten kann bzw. umgekehrt, daß bei einem Fokusfehler, jedoch einer einwandfreien Spurzentrierung kein scheinbarer Spurfehler angezeigt werden kann.

**Patentansprüche**

1. Optisches System zum Führen des Lesestrahles bei einem magneto-optischen Speicher mit einem Strahlteiler (4), eingesetzt in den Strahlengang des auf eine Speicherplatte (6) gerichteten, linear polarisierten Lichtstrahles, zum umlenken des reflektierten Lesestrahles auf eine Empfangseinrichtung (8 bis 11), die einen Polarisator (8) zum Aufteilen des reflektierten Lesestrahles in zwei Teilstrahlen, ein Abbildungssystem (9, 10) und eine Fotodetektoranordnung (11) zum Erzeugen von Rohdatensignalen (DATA) sowie Steuersignalen (SS, SF) für ein Spurfolge- bzw. ein Fokussiersystem aufweist, dadurch gekennzeichnet, daß zur Abbildung der Teilstrahlen des reflektierten Lesestrahles ein astigmatisches Abbildungssystem (9, 10) vorgesehen ist und daß die Fotodetektoranordnung (11) ein Vier-Quadrantendetektor (a, b, c, d), sowie einen weiteren Detektor (e) aufweist, die jeweils im Strahlengang eines der zwei Teilstrahlen angeordnet sind, wobei das Datensignal aus dem Intensitätsunterschied zwischen den beiden Teilstrahlen abgeleitet ist, sich das Steuersignal für das Fokussiersystem als Differenzsignal der Ausgsangssignale von zwei Quadrantenpaaren, jeweils gebildet aus den einander diametral gegenüberstehenden Quadranten (a, c bzw. b, d) des Vier-Quadrantendetektors ergibt und das Steuersignal für das Spurfolgesystem ein Differenzsignal der Ausgangssignale von Detektorsegmenten (z.B. a, d bzw. b, c) darstellt, die auf dem entsprechenden Detektor symmetrisch zu beiden Seiten einer Projektion der Tangente einer Abtastspur (61) der Speicherplatte angeordnet sind.

2. Optisches System nach Anspruch 1, dadurch gekennzeichnet, daß im Strahlengang des von dem Strahlteiler (4) ausgeblendeten reflektierten Lesestrahles der Polarisator (8) vor dem astigmatischen Abbildungssystem (9, 10) angeordnet ist.

3. Optisches System nach Anspruch 1, dadurch gekennzeichnet, daß der Polarisator (8) im Strahlengang des reflektierten Lesestrahles hinter dem astigmatischen Abbildungssystem (9, 10) angeordnet ist.

4. Optisches System nach einem der Ansprüche 1 bis 3, dadurch gekennzeichnet, daß der Vier-Quadrantendetektor (a, b, c, d) bezüglich eines der vom Polarisator (8) abgegebenen Teilstrahlen des reflektierten Lesestrahles so orientiert ist, daß eine seiner die Sektorgrenzen bildenden Diagonalen mit der Projektion der Tangente der Abtastspur (61) auf dem Fotodetektor (11) zusammenfällt.

5. Optisches System nach einem der Ansprüche 1 bis 3, dadurch gekennzeichnet, daß während der Vier-Quadrantendetektor (a, b, c, d) zum Ableiten des Steuersignales (SF) für das Fokussiersystem aus dem einen vom Polarisator (8) abgegebenen Teilstrahl benutzt wird, die dem anderen Teilstrahl zugeordnete Detektorfläche (e) für das Ableiten des Steuersignales für das Spurfolgesystem herangezogen wird und diese dazu in zwei Teilflächen (e1, e2) unterteilt ist, die symmetrisch zu beiden Seiten der Projektion der Tangente der Abtastspur (61) liegen.

6. Optisches System nach einem der Ansprüche 1 bis 5, dadurch gekennzeichnet, daß die Fotodetektoranordnung (11) einen Teil eines integrierten Schaltkreises bildet, der zugleich sowohl eine Schalteinheit (OA2) zum Gewinnen der Rohdatensignale (DATA), sowie Schalteinheiten (OA1 und OA3) zum Gewinnen der Steuersignale (SF und SS) für das Fokussiersystem bzw. das Spurfolgesystem enthält.

## Claims

1. Optical system for guiding the read-out beam in a magneto-optical memory, with a beam splitter (4), inserted in the beam path of the linearly polarized light beam directed onto a storage target (6), for deflecting the reflected read-out beam onto a receiving device (8 to 11), which has a polarizer for dividing the reflected read-out beam into two component beams, an imaging system (9, 10) and a photodetector arrangement (11) for the generating of raw data signals (DATA) as well as control signals (SS, SF) for a track following system or as focusing system, characterized in that an astigmatic imaging system (9, 10) is provided for imaging the component beams of the reflected read-out beam and in that the photodetector arrangement (11) has a four-quadrant detector (a, b, c, d), as well as a further detector (e), which are arranged in each case in the beam path of one of the two component beams, the data signal being derived from the difference in intensity between the two component beams, the control signal for the focusing system being obtained as difference signal of the ouput signals of two quadrant pairs, formed in each case from the diametrically opposed quadrants (a, c and b, d) of the four-quadrant detector and the control signal for the track following system representing a difference signal of the output signals of detector segments (for example a, d and b, c) which are arranged on the corresponding detector symmetrically on either side of a projection of the tangent of a scanning track (61) of the storage target.

2. Optical system according to Claim 1, characterized in that, in the beam path of the reflected read-out beam cut out by the beam splitter (4), the polarizer (8) is arranged in front of the astigmatic imaging system (9, 10).

3. Optical system according to Claim 1, characterized in that the polarizer (8) is arranged in the beam path of the reflected read-out beam behind the astigmatic imaging system (9, 10).

4. Optical system according to one of Claims 1 to 3, characterized in that the four-quadrant detector (a, b, c, d) is oriented with respect to one of the component beams of the reflected read-out beam emitted by the polarizer (8) such that one of its diagonals forming the sector boundaries coincides with the projection of the tangent of the scanning track (61) on the photodetector (11).

5. Optical system according to one of Claims 1 to 3, characterized in that, while the four-quadrant detector (a, b, c, d) is used for deriving the control signal (SF) for the focusing system from the one component beam emitted by the polarizer (8), the detector area (e) assigned to the other component beam is used for deriving the control signal for the track following system and for this purpose the said area is subdivided into two sub-areas (e1, e2), which lie symmetrically on either side of the projection of the tangent of the scanning track (61).

6. Optical system according to one of Claims 1 to 5, characterized in that the photodetector arrangement (11) forms a part of an integrated circuit, which at the same time includes both a switching unit (OA2) for obtaining the raw data signals (DATA), and switching units (OA1 and OA3) for obtaining the control signals (SF and SS) for the focusing system or the track following system.

## Revendications

1. Système optique servant à guider le faisceau de lecture dans une mémoire magnéto-optique, comportant un diviseur de faisceau (4) inséré dans le trajet du faisceau lumineux polarisé linéairement et dirigé sur un disque de mémoire (6), par renvoyer le faisceau de lecture réfléchi sur un dispositif récepteur (8 à 11), qui comporte un polariseur (8) servant à subdiviser le faisceau de lecture réfléchi en deux faisceaux partiels, un système de formation d'images (9, 10) et un dispositif (11) formant photodétecteur et servant à produire des signaux de données brutes (DATA) ainsi que des signaux de commande (SS, SF) pour un système de suivi de piste ou un système de focalisation, caractérisé par le fait qu'il est prévu un système astigmatique de formation d'images (9, 10) pour la formation de l'image des faisceaux partiels du faisceau de lecture réfléchi et que le dispositif (11) formant photodétecteur comporte un détecteur à quatre quadrants (a, b, c, d) ainsi qu'un autre détecteur (e), qui sont respectivement disposés dans le trajet du rayonnement de l'un des deux faisceaux partiels, auquel cas le signal de données est dérivé de la différence des intensités des deux faisceaux partiels, le signal de commande prévu pour le système de focalisation et présent sous la forme d'un signal égal à la différence des signaux de sortie de deux couples de quadrants, est formé respectivement à partir de quadrants diamétralement opposés (a, b, c, d) du détecteur à quatre quadrants, et le signal de commande pour le système de suivi de piste représente un signal formé par la différence des signaux de sortie de segments par exemple (a, d ou b, c) de détecteurs, qui sont disposés sur le détecteur correspondant, d'une manière symétrique par rapport aux deux côtés d'une projection de la tangente d'une piste d'exploration (61) du disque de mémoire.

2. Système optique suivant la revendication 1, caractérisé par le fait que dans le trajet de rayonnement du faisceau de lecture réfléchi qui a été isolé par le diviseur de faisceau (4), le polariseur (8) est disposé en avant du système astigmatique de formation d'image (9, 10).

3. Système optique suivant la revendication 1, caractérisé par le fait que le polariseur (8) est disposé sur le trajet du faisceau de lecture réfléchi, en arrière du dispositif astigmatique de formation d'images (9, 10).

4. Système optique suivanr l'une des revendications 1 à 3, caractérisé par le fait que le détecteur à quatre quadrants (a, b, c, d) est orienté par rapport à l'un des faisceaux partiels, délivrés par le polariseur (8), du faisceau de lecture réfléchi de telle sorte que l'une de ses diagonales formant les limites des secteurs coïncide avec la projection de la tangente de la piste d'exploration (61) sur le photodétecteur (11).

5. Système optique suivant l'une des revendications 1 à 3, caractérisé par le fait qu'alors que le détecteur à quatre quadrants (a, b, c, d) est utilisé pour dériver le signal de commande (SF) pour le système de focalisation à partir d'un faisceau partiel délivré par le polariseur (8), la surface (e) du détecteur, qui est associée à l'autre faisceau partiel, est utilisée pour l'obtention du signal de commande par le système de suivi de piste et cette surface est subdivisée en deux surfaces partielles (e1, e2), qui sont symétriques par rapport au deux côtés de la projection de la tangente de la piste d'exploration (61).

6. Système optique suivant l'une des revendications 1 à 5, caractérisé par le fait que le dispositif (11) formant photodétecteur forme une partie d'un circuit intégré, qui contient simultanément aussi bien une unité de commutation (OA2) pour l'obtention des signaux de données brutes (DATA) que des unités de commutation (OA1 et OA3) utilisées pour l'obtention des signaux de commande (SF et SS) pour le système de focalisation ou le système de suivi de piste.

# FIG 1

# FIG 2

FIG 4

FIG 5

FIG 6

FIG 3

FIG 12

# FIG 7

# FIG 8

# FIG 9

# FIG 10

# FIG 11